# EUROPEAN PATENT APPLICATION

(11) **EP 3 197 002 A1**
(43) Date of publication of application: **26.07.2017**
(21) Application number: 15839340.5
(22) Date of filing: 31.08.2015
(51) Int. Cl.: H02J 3/46, H02J 3/14, H02J 3/32, H02J 3/38

(54) **ENERGY MANAGEMENT APPARATUS, ENERGY MANAGEMENT METHOD, AND ENERGY MANAGEMENT PROGRAM**

(30) Priority: 12.09.2014 JP 2014187071
(71) Applicant: Kabushiki Kaisha Toshiba, Inc., Tokyo 105-8001 (JP)
(72) Inventor: KUBOTA, Kazuto, Tokyo 105-8001 (JP); SUYAMA, Akihiro, Tokyo 105-8001 (JP); EDAHIRO, Toshiaki, Tokyo 105-8001 (JP); WADA, Takahisa, Tokyo 105-8001 (JP); MATSUE, Kiyotaka, Tokyo 105-8001 (JP); TONAMI, Yosuke, Tokyo 105-8001 (JP)
(74) Representative: Moreland, David
(86) International application number: PCT/JP2015/074619
(87) International publication number: WO 2016/039195

(57) **Abstract**

An energy management device in embodiments includes a selection unit and an output unit. The selection unit selects a power supply or load to be controlled in accordance with responsibility, among a plurality of power supplies or loads having different responsibilities, in accordance with a command used to change an amount of consumption of a power supplied from a commercial power supply. The output unit outputs a control signal used to change the amount of consumption of power supplied from the commercial power supply to a control circuit configured to control the power supply or load selected by the selection unit.

## Description

### [Technical Field]

An embodiment of the present invention relates to an energy management device, an energy management method, and an energy management program.

### [Background Art]

In recent years, in electric power companies that perform supply of power, flexible charge systems are set in accordance with a demand for power. Consumers of power within such a system can reduce an amount of payment by shifting usage time of power when power is maximally consumed and thus minimizing usage of the power according to requests of electric power companies. For example, requests of electric power companies are given to consumers as requests used to increase or decrease an amount of power consumption for a certain period of time. As an example of power consumption, consumption of power for accumulating electricity in a battery is included.

On the other hand, houses including power generating means such as fuel cells and solar photovoltaic devices have also increased. Power generated by such power generating means fluctuates in accordance with the environment. Thus, responses when the generated power increases or decreases are slow in some cases.

As a result, when requests of electric power companies are changed in a relatively short period, the house side cannot follow the requests quickly in some cases.

### [Citation List]

### [Patent Literature]

[Patent Literature 1]
   Japanese Unexamined Patent Application, First Publication No. 2011-72166
[Patent Literature 2]
   Japanese Unexamined Patent Application, First Publication No. 2011-92002

### [Summary of Invention]

### [Technical Problem]

An object to be accomplished by the present invention is to provide an energy management device, an energy management method, and an energy management program which can follow a command signal transmitted from the outside quickly.

### [Solution to Problem]

An energy management device in embodiments includes a selection unit and an output unit. The selection unit selects a power supply or load to be controlled in accordance with responsibility, among a plurality of power supplies or loads having different responsibilities, in accordance with a command used to change an amount of consumption of a power supplied from a commercial power supply. The output unit outputs a control signal used to change the amount of consumption of the power supplied from the commercial power supply to a control circuit configured to control the power supply or load selected by the selection unit.

### [Brief Description of Drawings]

Fig. 1 is a schematic diagram of an energy management device 100 related to a first embodiment.
Fig. 2 is a schematic diagram showing a constitution of a fuel cell unit 200 related to the first embodiment.
Fig. 3 is an overall constitution diagram of the energy management device 100 related to the first embodiment.
Fig. 4 is a functional block diagram of the energy management device 100 related to the first embodiment.
Fig. 5 is a view illustrating an example of variation suppression command values received by a receiving unit 112 related to the first embodiment.
Fig. 6 is a view illustrating an example of a specification of a fuel cell unit 200 related to the first embodiment.
Fig. 7 is a view illustrating an example of a specification of a storage battery unit 300 related to the first embodiment.
Fig. 8 is a view illustrating an example of synthesized variation widths of the fuel cell unit 200 and the storage battery unit 300 related to the first embodiment.
Fig. 9 is a flowchart for describing a flow of a process performed by the energy management device 100 related to the first embodiment.
Fig. 10 is a flowchart for describing a flow of a process of determining a variation width performed by a variable range and operation order determining unit 116 in the first embodiment.
Fig. 11 is a flowchart for describing a flow of a process of controlling a power consumption adjusting device performed by a load controller 118 in the first embodiment.
Fig. 12 is a table illustrating an example of response rates of power consumption adjusting devices.
Fig. 13 is a view illustrating an example of variation suppression command values received by the receiving unit 112 related to a modified example of the first embodiment.
Fig. 14 is a map serving as an example in which response rates and energy efficiencies of power consumption adjusting devices are illustrated.
Fig. 15 is a vector diagram illustrating an example of response rates of the power consumption adjusting devices.
Fig. 16 is a synthesized vector diagram in which response rates of the storage battery unit 300 and a cell 210 are synthesized.
Fig. 17 is a vector diagram illustrating an example of a response rate of the cell 210.
Fig. 18 is a schematic diagram of an energy management device 100 related to a second embodiment.

### [Description of Embodiments]

Hereinafter, an energy management device, an energy management method, and an energy management program of an embodiment will be described with reference to the drawings.

### (First embodiment)

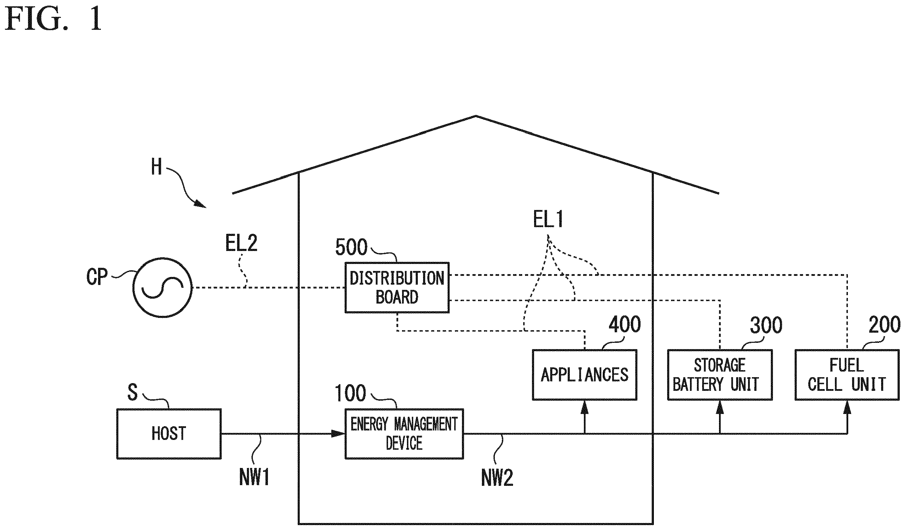

Fig. 1 is a schematic diagram of an energy management device 100 related to a first embodiment. A building H receiving power supplied from a commercial power supply is, for example, a house. The building H includes the energy management device 100, a fuel cell unit 200, a storage battery unit 300, an appliances 400, and a distribution board 500.

The energy management device 100 communicates with a host S outside of the building H over a network NW1. The network NW1 is a wide area network (WAN) including, for example, the Internet, a telephone line, and the like. Furthermore, the energy management device 100 communicates with the fuel cell unit 200, the storage battery unit 300, and the appliances 400 over a network NW2. The network NW2 is, for example, a wired or wireless local area network (LAN).

The energy management device 100 receives variation suppression command values transmitted from the host S.

The variation suppression command values are examples of "commands." The energy management device 100 manages batteries and home appliances to be used on the basis of the received variation suppression command values to control a load with respect to power. The energy management device 100 is, for example, a home energy management system (HEMS) configured to manage energy of the building H.

The energy management device 100 generates a command value C1, a command value C2, and a command value C3 on the basis of the received variation suppression command values. The command values C1 to C3 are examples of "control signals."

The command value C1 is a signal used to perform control so that power generated by the fuel cell unit 200 is supplied to the appliances 400 via the distribution board 500. The command value C2 is a signal used to perform control so that power generated by the fuel cell unit 200 is consumed by a reverse power flow preventing heater 220 (which will be described later) of the fuel cell unit 200. The command value C3 is a signal used to perform control so that the storage battery unit 300 is charged with power supplied via the distribution board 500 from a commercial power supply CP, or the storage battery unit 300 discharges power accumulated therein and supplies the power to the appliances 400 via the distribution board 500.

The energy management device 100 transmits the generated command values C1 and C2 to the fuel cell unit 200 over the network NW2. The energy management device 100 transmits the generated command value C3 to the storage battery unit 300 over the network NW2.

The fuel cell unit 200 includes fuel cells (cells) such as, for example, solid-state polymer fuel cells, solid-state oxide fuel cells, phosphoric acid fuel cells, and molten carbonate fuel cells. Fuel cells can acquire, as power, electric energy generated when a negative electrode active material chemically reacts with a positive electrode active material. The negative electrode active material includes, for example, hydrogen, and the positive electrode active material includes, for example, oxygen in air. Hereinafter, the negative electrode active material and the positive electrode active material are referred to as a "gas F." Note that the fuel cell unit 200 is an example of a "power supply or a load."

The storage battery unit 300 includes secondary batteries such as, for example, lithium ion batteries, lead storage batteries, sodium sulfur batteries, redox flow batteries, and nickel hydride batteries. The storage battery unit 300 further includes a power conditioning system (PCS) in which an alternating current (AC) and a direct current (DC) can be mutually exchanged. Thus, the storage battery unit 300 can charge a storage battery on the basis of power supplied via the distribution board 500 from the commercial power supply CP, or supply power discharged by the storage battery to the appliances 400 via the distribution board 500. Note that the storage battery unit 300 is an example of a "power supply or a load."

The appliances 400 includes an electrical device such as a television, an air conditioner, a refrigerator, and a washing machine. Furthermore, the appliances 400 may be an electric heating device such as a heat pump hot water supply device, a gas water heater, and a floor heater.

The distribution board 500 is connected to the commercial power supply CP via an electric line EL2, and is connected to the fuel cell unit 200, the storage battery unit 300, and the appliances 400 via an electric line EL1. Power fed from the commercial power supply CP is, for example, single phase AC power of a voltage 200 [V], is stepped down to a voltage 100 [V] using the distribution board 500, and is supplied to a side of the fuel cell unit 200, the storage battery unit 300, and the appliances 400.

The host S is a control device configured to monitor and control the power supplied to the building H. The host S is, for example, an energy management system (EMS). The host S transmits the variation suppression command values to the energy management device 100 over the network NW1. The variation suppression command values are command signals including commands used to change an amount of power consumed in the building H. For example, the host is instructed to decrease the amount of power consumed in the building H when an amount of power supply from an electric power company is excessive during daytime, and the host is instructed to increase the amount of power consumed in the building H when an amount of power supply from the electric power company is reduced, such as during nighttime. A decrease in an amount of power consumed includes discharging from the storage battery of the storage battery unit 300, and an increase in the amount of power consumed includes charging of the storage battery of the storage battery unit 300. For this reason, a cycle in which the storage battery of the storage battery unit 300 is charged when power is surplus and the storage battery discharges when power is insufficient is realized.

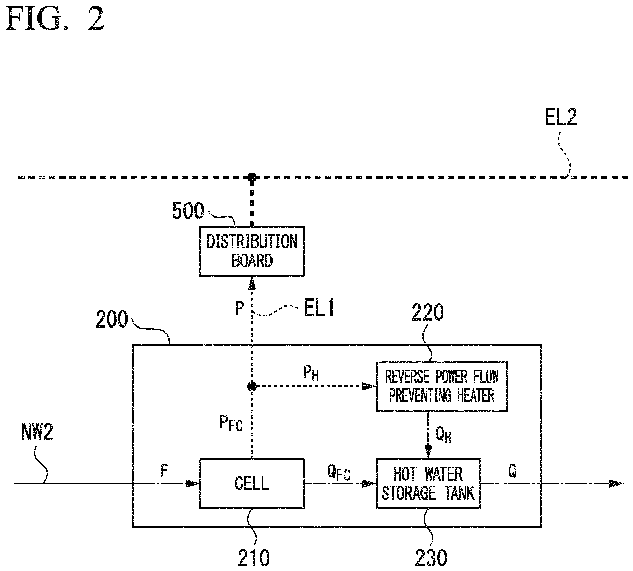

Here, a constitution of the fuel cell unit 200 will be described with reference to Fig. 2. Fig. 2 is a schematic diagram showing the constitution of the fuel cell unit 200 related to the first embodiment.

The fuel cell unit 200 includes a cell 210, the reverse power flow preventing heater 220, and a hot water storage tank 230. The cell 210 is a fuel cell of one unit. For example, a gas F supplied to the cell 210 causes a chemical reaction inside a casing of the cell 210 and generates AC power, heat QFC, and water. The cell 210 converts the generated DC power into AC power PFC using a converter (not shown) and supplies the converted AC power PFC to the outside. Note that water generated inside the cell 210 is discharged to the outside of the fuel cell unit 200 via a drain path (not shown).

The fuel cell unit 200 supplies the gas F to the cell 210 on the basis of the command value C1 transmitted from the energy management device 100 and generates electricity. Here, an amount (a supply amount) of the gas F supplied in accordance with the command value C1 is determined on the basis of conversion efficiency with an amount of electric energy (power) generated inside the cell 210 in advance using a cell. The conversion efficiency is a ratio of the amount of electric energy (power) generated inside the cell 210 to the supply amount of the gas F. Furthermore, the conversion efficiency may be conversion efficiency of an integration time at which the gas F is supplied at a constant amount of supply and the amount of electric energy (power) generated inside the cell 210. Thus, the fuel cell unit 200 can acquire power PFC according to the supply amount (or the integration time) of the gas F from the cell 210. Note that the conversion efficiency is already stored in a storage 130 which will be described later, and the energy management device 100 determines the command value C1 with reference to the conversion efficiency. The fuel cell unit 200 supplies power P serving as a part or all of power PFC, which is obtained from the cell 210, to the appliances 400 via the distribution board 500.

The reverse power flow preventing heater 220 converts power PH serving as a part or all of power PFC generated by the cell 210 into heat QH and discharges the heat QH. Control is performed so that the storage battery unit 300 is charged with power obtained by subtracting the power PH from the power PFC or the power obtained by subtracting the power PH from the power PFC is consumed by the appliances 400. Thus, the reverse power flow preventing heater 220 prevents the power PFC generated by the cell 210 from being directly supplied (reversely flowing) to the commercial power supply CP via the distribution board 500.

The hot water storage tank 230 accommodates water (or hot water) capable of storing heat therein. The heat QH discharged by the reverse power flow preventing heater 220 is supplied to the hot water storage tank 230. The discharged heat QH is stored in the water (or the hot water) accommodated inside the hot water storage tank 230. Furthermore, the heat QFC generated inside the cell 210 is also moved to the hot water storage tank 230 via a heat medium. The heat medium is, for example, a metal with high thermal conductivity provided between the cell 210 and the hot water storage tank 230. The fuel cell unit 200 discharges the heated water (or the hot water) Q inside the hot water storage tank 230 to a faucet, a bathtub, or the like.

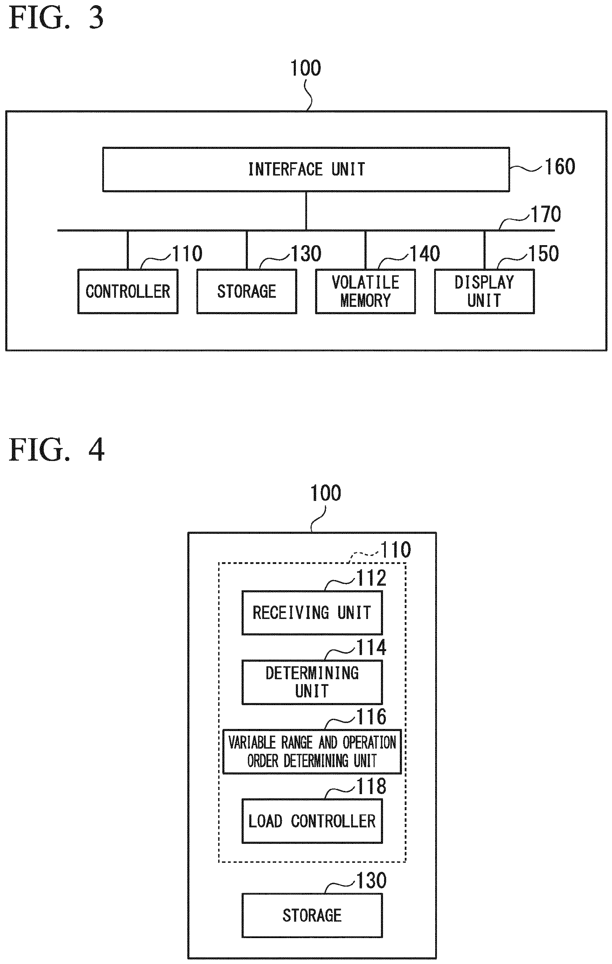

Fig. 3 is an overall constitution diagram of the energy management device 100 related to the first embodiment. The energy management device 100 includes a controller 110, a storage 130, a volatile memory 140, a display unit 150, and an interface unit 160. The controller 110, the storage 130, a volatile memory 140, the display unit 150, and the interface unit 160 are mutually connected via an internal bus 170.

The controller 110 is a processor such as, for example, a central processing unit (CPU). The controller 110 is a software functional unit that functions when the processor executes a program stored in the storage 130. Furthermore, some or all of functional units in the controller 110 may be hardware functional units such as a large scale integration (LSI) and an application specific integrated circuit (ASIC).

The storage 130 is a non-volatile storage device such as a read only memory (ROM), a hard disk drive (HDD), a solid-state drive (SSD), an electrically erasable programmable ROM (EEPROM), a flash memory, and the like. The storage 130 stores information such as, for example, conversion efficiency of the cell 210, variation suppression command values, command values, a specification of the fuel cell unit 200, and a specification of the storage battery unit 300.

Also, the volatile memory 140 is a volatile storage device such as a random access memory (RAM) and a static RAM (SRAM). The program stored in the storage 130 is, for example, developed (loaded) in the volatile memory 140 and is executed by the processor of the controller 110. Furthermore, the program stored in the storage 130 may be executed by the processor of the controller 110 without being developed in the volatile memory 140.

The display unit 150 is a display device configured to display various information, is constituted as a touch panel, and receives an operation input from a user (a resident) of the building H. The interface unit 160 is a hardware interface such as, for example, Universal Serial Bus (USB) and an Ethernet (registered trademark). The energy management device 100 is connected to be able to communicate with the energy management device 100 via the interface unit 160.

Fig. 4 is a functional block diagram of the energy management device 100 related to the first embodiment. The energy management device 100 includes, for example, a receiving unit 112, a determining unit 114, a variable range and operation order determining unit 116, a load controller 118, and the storage 130.

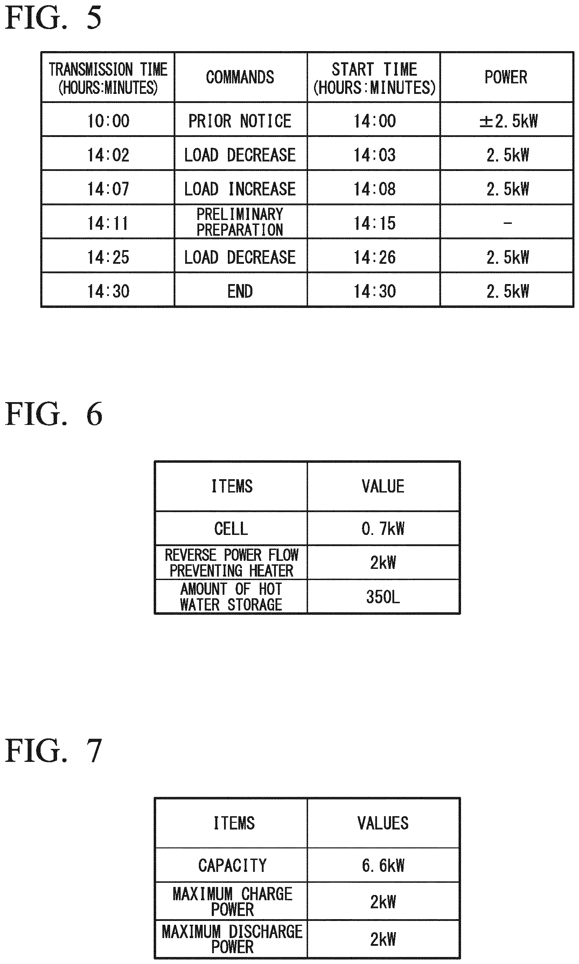

The receiving unit 112 receives the variation suppression command values transmitted from the host S. Fig. 5 is a view illustrating an example of each of the variation suppression command values received by a receiving unit 112 related to the first embodiment. The variation suppression command values include information such as, for example, transmission time, commands, start time, and an amount of power consumption. The transmission time is time at which the variation suppression command values are transmitted by the host S. The commands relate to operations by which the host S causes the energy management device 100 to change a load at the building H side. The start time is a time at which the energy management device 100 is caused to start a process based on the command. The amount of power consumption indicates a variation width (hereinafter referred to as a "variation width Wn") of power consumed at the building H side.

For example, a command transmitted at a transmission time of 10:00 is "prior notice." The prior notice is notice that commands each relate to schedules, which are sequentially transmitted from the host S, from the start time (for example, 14:00). The commands are, for example, "load decrease," "load increase," "preliminary preparation," and "end" commands. The "load decrease" and "load increase" commands are, for example, instructions by which the load at the building H side is caused to be increased or decreased to minimize a variation width Wn of an amount of power consumed of ±2.5 [kW]. A specific example will be exemplified below.

For example, a "load decrease" command transmitted at a transmission time 14:02 instructs the energy management device 100 to decrease a load of 2.5 [kW] from a start time 14:03. Thus, the energy management device 100 controls the fuel cell unit 200 and the storage battery unit 300 so that an amount of power consumed among that supplied via the distribution board 500 from the commercial power supply CP is decreased by 2.5 [kW].

Also, a "load increase" command transmitted at a transmission time 14:07 instructs the energy management device 100 to increase a load of 2.5 [kW] from a start time 14: 08. Thus, the energy management device 100 controls the fuel cell unit 200 and the storage battery unit 300 so that the amount of power consumed among that supplied via the distribution board 500 from the commercial power supply CP is increased by 2.5 [kW].

A "preliminary preparation" command transmitted at a transmission time 14:11 instructs the energy management device 100 to charge or discharge the storage battery unit 300 so that a load of 2.5 [kW] can be increased or decreased from a start time 14:15.

An "end" command transmitted at a transmission time 14:30 instructs the energy management device 100 to end all of the commands at a start time 14:30.

The determining unit 114 determines whether a synthesized variation width Wc is larger than a variation width Wn of an amount of power consumption of the variation suppression command value received by the receiving unit 112. The synthesized variation width Wc is obtained by synthesizing variation widths of the storage battery unit 300, the cell 210, and the reverse power flow preventing heater 220. Hereinafter, the storage battery unit 300, the cell 210, and the reverse power flow preventing heater 220 are collectively referred to as a "power consumption adjusting device."

Hereinafter, the synthesized variation width Wc will be described with reference to Figs. 6 to 8.

Fig. 6 is a view illustrating an example of a specification of the fuel cell unit 200 related to the first embodiment.

In the fuel cell unit 200, for example, maximum power P obtained from the cell 210 is 0.7 [kW]. Furthermore, maximum power consumed during heat conversion of the reverse power flow preventing heater 220 is 2 [kW]. Hereinafter, the maximum power consumed during the heat conversion of the reverse power flow preventing heater 220 is referred to as "maximum consumption power PC1." Furthermore, a maximum amount of water stored in the hot water storage tank 230 is 350 [L].

Fig. 7 is a view illustrating an example of a specification of the storage battery unit 300 related to the first embodiment. In the storage battery unit 300, for example, an accumulated capacity of a battery is 6.6 [kWh]. Chargeable maximum power and dischargeable maximum power are defined using a reference charging rate (for example, about 50 [%]) as a reference, and both of the maximum powers are 2 [kW]. Hereinafter, the chargeable maximum power is referred to as "maximum charge power," and the dischargeable maximum power is referred to as "maximum discharge power."

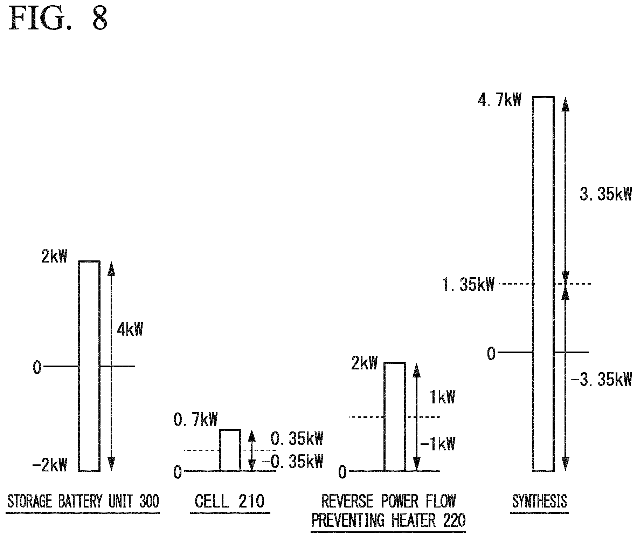

Fig. 8 is a view illustrating an example of synthesized variation widths of the fuel cell unit 200 and the storage battery unit 300 related to the first embodiment. Maximum charge power and maximum discharge power of the storage battery unit 300 are, for example, 2 [kW]. Thus, the storage battery unit 300 has a maximum variation width of ±2 [kW] using 0 [kW] as a reference. For example, power P in the cell 210 is 0.7 [kW]. Thus, the cell 210 has a maximum variation width of ±0.35 [kW] using 0.35 [kW] as a reference.

In the reverse power flow preventing heater 220, for example, power consumed during heat conversion is 2 [kW]. Thus, the reverse power flow preventing heater 220 has a maximum variation width of ±1 [kW] using 1 [kW] as a reference. In this case, a maximum synthesized variation width of a power consumption adjusting device is ±3.35 [kW] using 1.35 [kW] as a reference.

The determining unit 114 determines that the synthesized variation width Wc is larger than the variation width Wn, for example, when the variation width Wn of the variation suppression command value is ±2.5 [kW]. In the case of the above-described numerical value example, the synthesized variation width Wc is 6.7 [kW].

The variable range and operation order determining unit 116 determines a variation width of the power consumption adjusting device from a command of the variation suppression command value received by the receiving unit 112 and the variation width Wn for each power consumption adjusting device. Furthermore, the variable range and operation order determining unit 116 determines an order of operations (hereinafter referred to as an "operation order") of the power consumption adjusting device in an order in which response rates of the power consumption adjusting device are faster. The response rates relate to speeds at which power reaches power indicated by the command value after the operation of the power consumption adjusting device starts. In this embodiment, response rates are faster in order of the storage battery unit 300, the reverse power flow preventing heater 220, and the cell 210. For this reason, the variable range and operation order determining unit 116 determines an operation order in the order of the storage battery unit 300, the reverse power flow preventing heater 220, and the cell 210. Note that the response rates are an example of "responses."

The variable range and operation order determining unit 116 determines variation widths W1 to W3 as will be described below, for example, when a command of the variation suppression command value is a "prior notice" and the variation width Wn is 5 [kW].

First, the variable range and operation order determining unit 116 determines the variation width Wn as a variation width W3 of the storage battery unit 300 when a maximum variation width W3max of the storage battery unit 300 is larger than the variation width Wn. The maximum variation width W3max is a total value of a value of maximum charge power and a value of maximum discharge power. The maximum variation width W3max is, for example, 4 [kW]. Furthermore, the variable range and operation order determining unit 116 determines the maximum variation width W3max as a variation width W3 of the storage battery unit 300 when the maximum variation width W3max is smaller than the variation width Wn.

Subsequently, the variable range and operation order determining unit 116 determines the maximum variation width W2max as a variation width W2 when a subtraction value D1 obtained by subtracting the variation width W3 from the variation width Wn is larger than a maximum variation width W2max that the reverse power flow preventing heater 220 is capable of handling. In the above-described example, the subtraction value D1 is, for example, 1 (= 5-4) [kW]. The maximum variation width W2max corresponds to maximum consumption power PC1 of the reverse power flow preventing heater 220. The maximum variation width W2max is, for example, 2 [kW]. Furthermore, the variable range and operation order determining unit 116 determines the subtraction value D1 as the variation width W2 when the subtraction value D1 is smaller than the maximum variation width W2max.

Finally, the variable range and operation order determining unit 116 determines the maximum variation width W1max as a variation width W1 of the cell 210 when a subtraction value D2 obtained by subtracting the variation width W3 and the variation width W2 from the variation width Wn is larger than a maximum variation width W1max serving as a maximum value of power P obtained from the cell 210. Furthermore, the variable range and operation order determining unit 116 determines the subtraction value D2 as the variation width W1 of the cell 210 when the subtraction value D2 is smaller than the maximum variation width W1max of the cell 210. Note that a combination of the determining unit 114 and the variable range and operation order determining unit 116 is an example of a "selection unit."

The load controller 118 controls the power consumption adjusting device on the basis of the command of the variation suppression command value received by the receiving unit 112 and the variation width and the operation order determined by the variable range and operation order determining unit 116. Note that the load controller 118 is an example of an "output unit."

### <Case of "prior notice" command>

First, the load controller 118 generates a command value C1 by which the cell 210 is caused to generate power of a median of the variation width W1 at all times and to output the generated command value C1 to the cell 201. The load controller 118 generates a command value C1 by which an amount of generation of the cell 210 is caused to be 10 [kW] at all times, for example, when the variation width W1 determined by the variable range and operation order determining unit 116 is 20 [kW], and to output the generated command value C1 to the cell 210. Thus, the cell 210 performs control to generate electricity on the basis of the command value C1 output by the load controller 118.

Subsequently, the load controller 118 generates a command value C2 by which the reverse power flow preventing heater 220 is caused to consume power of a median of the variation width W2 at all times and to output the generated command value C2 to the reverse power flow preventing heater 220. The load controller 118 generates the command value C2 by which the reverse power flow preventing heater 220 is caused to consume power of 0.5 [kW] at all times, for example, when the variation width W2 is 1 [kW], and to output the generated command value C2 to the reverse power flow preventing heater 220. Thus, the reverse power flow preventing heater 220 performs control to consume the power on the basis of the command value C2 output by the load controller 118.

Subsequently, the load controller 118 generates a command value C3 by which the storage battery unit 300 is caused to approach a reference charging rate and to output the generated command value C3 to the storage battery unit 300. Thus, the storage battery unit 300 is charged with predetermined power and predetermined power is discharged from the storage battery unit 300 on the basis of the command value C3 output by the load controller 118. Note that, unless otherwise noted, control of the cell 210 and the reverse power flow preventing heater 220, which have been described above, is not stopped.

### <Case of "load decrease" command>

First, the load controller 118 generates a command value C3 by which the storage battery unit 300 is caused to discharge the maximum discharge power within a range of the variation width W3 and to output the generated command value C3 to the storage battery unit 300. The load controller 118 generates a command value C3 by which the storage battery unit 300 is caused to discharge maximum discharge power (for example, 2 [kW]) within the range of the variation width W3 (for example, 4 [kW]), for example, when a command of a variation suppression command value is a "load decrease" command of 2.5 [kW], and to output the generated command value C3 to the storage battery unit 300. Thus, the storage battery unit 300 is controlled to discharge on the basis of the command value C3 output by the load controller 118.

Subsequently, the load controller 118 generates a command value C2 by which an operation of the reverse power flow preventing heater 220 is stopped and outputs the generated command value C2 to the reverse power flow preventing heater 220. The load controller 118 generates a command value C2 by which the operation of the reverse power flow preventing heater 220 is caused to be stopped, for example, when the reverse power flow preventing heater 220 operates with consumption power PC2 of 0.5 [kW], and to output the generated command value C2 to the reverse power flow preventing heater 220. Thus, the reverse power flow preventing heater 220 is controlled to stop its operation on the basis of the command value C2 output by the load controller 118. As a result, the load controller 118 can reduce an amount of power consumption (for example, 0.5 [kW]).

Subsequently, the load controller 118 generates a command value C1 by which the cell 210 is caused to generate electricity of power P within a range of a median of the variation width W1 when a subtraction value D3 exceeds the median of the variation width W1 and to output the generated command value C1 to the cell 210. The subtraction value D3 is a value obtained by subtracting the maximum discharge power of the storage battery unit 300 and the consumption power PC2 of the reverse power flow preventing heater 220 from the amount of power consumption of the "load decrease" command. Thus, the cell 210 performs control to generate electricity on the basis of the command value C1 output by the load controller 118. Furthermore, the load controller 118 generates a command value C1 by which an operation of the cell 210 is caused to be stopped when the subtraction value D3 does not exceed the median of the variation width W1 and to output the generated command value C1 to the cell 210. Thus, the cell 210 is controlled to stop its operation on the basis of the command value C1 output by the load controller 118.

For example, in the case of the above-described numerical value example, the maximum discharge power of the storage battery unit 300 is 2 [kW], and the consumption power PC2 is 0.5 [kW]. Thus, the subtraction value D3 (= 0 [kW]) does not exceed the median (for example, 0.35 [kW]) of the variation width W1. As a result, the cell 210 is controlled to stop its operation by the load controller 118.

### <Case of "load increase" command>

First, the load controller 118 generates a command value C3 by which the storage battery unit 300 is caused to be charged with maximum charge power within the range of the variation width W3 and to output the generated command value C3 to the storage battery unit 300. The load controller 118 generates a command value C3 by which the storage battery unit 300 is caused to be charged with maximum charge power (for example, 2 [kW]) within a range of the variation width W3 (for example, 4 [kW]), for example, when an amount of power consumption of a command of a variation suppression command value is 2.5 [kW], and to output the generated command value C3 to the storage battery unit 300. Thus, the storage battery unit 300 is controlled to be charged on the basis of the command value C3 output by the load controller 118.

Subsequently, the load controller 118 generates a command value C2 by which the reverse power flow preventing heater 220 is caused to maximally consume power within a range of the variation width W2 and to output the generated command value C2 to the reverse power flow preventing heater 220. The load controller 118 generates, for example, a command value C2 by which power of 1 [kW] is caused to be consumed within the range of the variation width W2 (for example, 1 [kW]) and to output the generated command value C2 to the reverse power flow preventing heater 220. Thus, the reverse power flow preventing heater 220 performs control to consume power on the basis of the command value C2 output by the load controller 118.

Subsequently, the load controller 118 generates a command value C1 by which an operation of the cell 210 is caused to be stopped, and outputs the generated command value C1 to the cell 210. Thus, the cell 210 is controlled to stop its operation on the basis of the command value C1 output by the load controller 118.

### <Case of "preliminary preparation" command>

The load controller 118 generates a command value C3 by which an accumulated capacity of the storage battery unit 300 is caused to approach the reference charging rate when the accumulated capacity of the storage battery unit 300 is shifted by a predetermined value (for example, 10 [%]) or more from the reference charging rate (for example, about 50 [%]), and to output the generated command value C3 to the storage battery unit 300. Thus, control is performed so that the storage battery unit 300 is charged with predetermined power or predetermined power is discharged from the storage battery unit 300 on the basis of the command value C3 output by the load controller 118.

### <Case of "end" command>

The load controller 118 generates command values C1 to C3 by which operations of the power consumption adjusting device are caused to be stopped when a command of a variation suppression command value is an "end" command and to output the generated command values C1 to C3 to consumption amount adjusting mechanisms. Thus, the power consumption adjusting devices are controlled to stop their operations on the basis of the command values C1 to C3 output by the load controller 118.

### [Operational flow of energy management device 100]

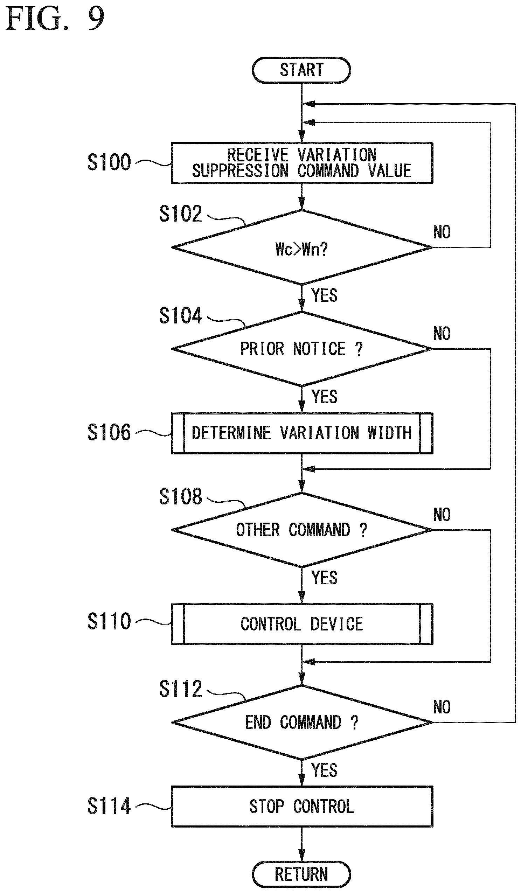

Fig. 9 is a flowchart for describing a flow of a process performed by the energy management device 100 related to the first embodiment. A process in this flowchart is repeatedly performed at a predetermined period (for example, once every half day).

First, the receiving unit 112 receives a variation suppression command value transmitted from the host S (Step S100). Subsequently, the determining unit 114 determines whether a synthesized variation width Wc is larger than a variation width Wn of an amount of power consumption of the variation suppression command value received by the receiving unit 112 (Step S102). When the synthesized variation width Wc is smaller than the variation width Wn (Step S102: No), the energy management device 100 returns to a process of Step S100. Furthermore, when the synthesized variation width Wc is larger than the variation width Wn (Step S102: Yes), the energy management device 100 determines whether a command of the received variation suppression command value is a "prior notice" command (Step S104). When the command of the variation suppression command value is not a "prior notice" (Step S104: No), the energy management device 100 performs a process of Step S108 which will be described later. When the command of the variation suppression command value is a "prior notice" (Step S104: Yes), the variable range and operation order determining unit 116 determines a variation width of the power consumption adjusting device for each power consumption adjusting device from the command and the variation width Wn of the variation suppression command value received by the receiving unit 112 (Step S106). Furthermore, the variable range and operation order determining unit 116 determines an order of operations of the power consumption adjusting device in an order in which response rates of the power consumption adjusting device are faster.

Subsequently, the load controller 118 generates a command value C1 by which the cell 210 is caused to generate power of a median of a variation width W1 at all times and to output the generated command value C1 to the cell 210. Subsequently, the load controller 118 generates a command value C2 by which the reverse power flow preventing heater 220 consumes power of a median of a variation width W2 at all times, and outputs the generated command value C2 to the reverse power flow preventing heater 220. Subsequently, the load controller 118 generates a command value C3 by which the storage battery unit 300 is caused to approach a reference charging rate and to output the generated command value C3 to the storage battery unit 300.

Subsequently, the energy management device 100 determines whether the command of the received variation suppression command value is one of a "load decrease" command, a "load increase" command, and a "preliminary preparation" command (Step S108). When the command is not one of the "load decrease" command, the "load increase" command, and the "preliminary preparation" command, a process of Step S112 which will be described later is performed. When the command is one of the "load decrease" command, the "load increase" command, and the "preliminary preparation" command (Step S108: Yes), the load controller 118 controls the power consumption adjusting device on the basis of the command of the variation suppression command value received by the receiving unit 112 and the variation width and the operation order determined by the variable range and operation order determining unit 116 (Step S110).

Subsequently, the energy management device 100 determines whether the command of the received variation suppression command value is an "end" command (Step S112). When the command of the variation suppression command value is not an "end" command (Step S112: No), the energy management device 100 returns to the process of Step S100. When the command of the variation suppression command value is an "end" command (Step S112: Yes), the load controller 118 generates command values C1 to C3 by which operations of the power consumption adjusting device are caused to be stopped and to output the generated command values C1 to C3 to corresponding consumption amount adjusting mechanisms (Step S114). Thus, the power consumption adjusting device is controlled to stop its operation on the basis of the command values C1 to C3 output by the load controller 118. Here, a 1 routine in this flowchart ends.

### [Operational flow of determining variation width of variable range and operation order determining unit 116 (Step S106)]

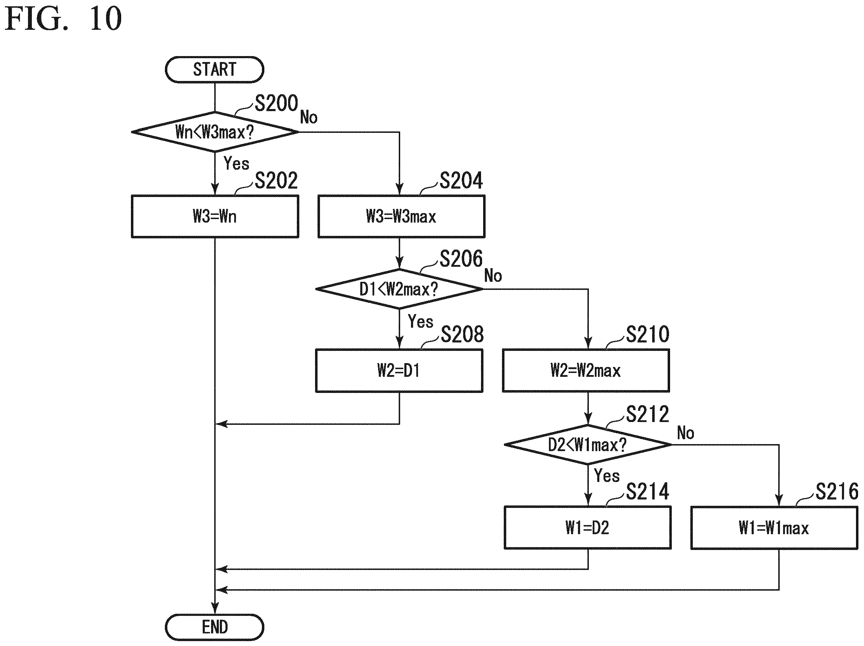

Fig. 10 is a flowchart for describing a flow of a process of determining a variation width performed by the variable range and operation order determining unit 116 in the first embodiment. The process in this flowchart corresponds to the process of Step S106 in the flowchart of Fig. 9.

First, the variable range and operation order determining unit 116 determines whether a maximum variation width W3max of the storage battery unit 300 is larger than a variation width Wn (Step S200). When the maximum variation width W3max of the storage battery unit 300 is larger than the variation width Wn (Step S200: Yes), the variable range and operation order determining unit 116 determines the variation width Wn as the variation width W3 of the storage battery unit 300 (Step S202). Here, the process in this flowchart ends.

When the maximum variation width W3max of the storage battery unit 300 is smaller than the variation width Wn (Step S200: No), the variable range and operation order determining unit 116 determines the maximum variation width W3max as the variation width W3 of the storage battery unit 300 (Step S204). Subsequently, the variable range and operation order determining unit 116 determines whether a subtraction value D 1 is smaller than a maximum variation width W2max of the reverse power flow preventing heater 220 (Step S206). When the subtraction value D1 is smaller than the maximum variation width W2max of the reverse power flow preventing heater 220 (Step S206: Yes), the variable range and operation order determining unit 116 determines the subtraction value D1 as the variation width W2 (Step S208). Here, the process in this flowchart ends.

When the subtraction value D 1 is larger than the maximum variation width W2max of the reverse power flow preventing heater 220 (Step S206: No), the variable range and operation order determining unit 116 determines the maximum variation width W2max as the variation width W2 (Step S210). Subsequently, the variable range and operation order determining unit 116 determines whether the subtraction value D2 is smaller than the maximum variation width W1max (Step S212). When the subtraction value D2 is smaller than the maximum variation width W1max (Step S212: Yes), the variable range and operation order determining unit 116 determines the subtraction value D2 as the variation width W1 (Step S214). When the subtraction value D2 is larger than the maximum variation width W1max (Step S212: No), the variable range and operation order determining unit 116 determines the maximum variation width W1max as the variation width W1 (Step S216). Here, the process in this flowchart ends.

### [Operational flow of controlling power consumption adjusting device of load controller 118 (Step S110)]

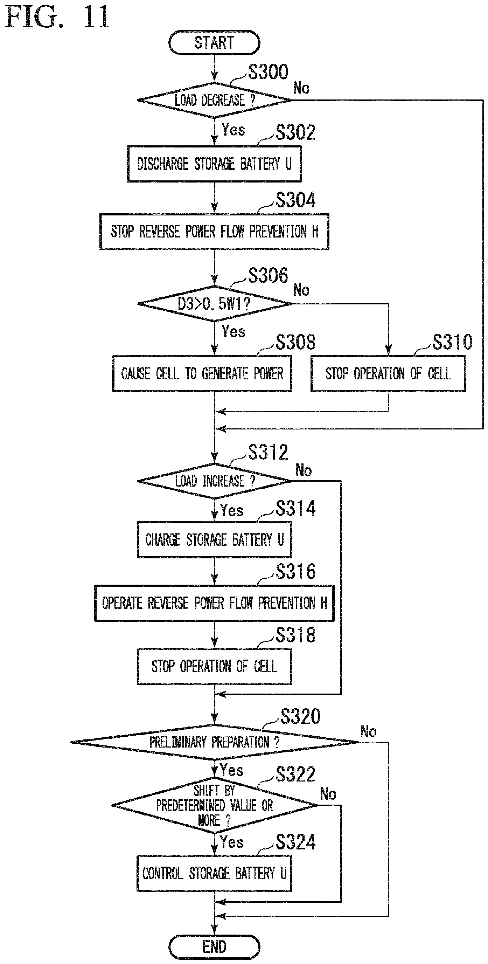

Fig. 11 is a flowchart for describing a flow of a process of controlling the power consumption adjusting device performed by the load controller 118 in the first embodiment. A process in this flowchart corresponds to the process of Step S110 in the flowchart of Fig. 9.

First, the energy management device 100 determines whether a command of the received variation suppression command value is a "load decrease" command (Step S300). When the command of the received variation suppression command value is not a "load decrease" command (Step S300: No), the energy management device 100 performs a process of Step S312 which will be described later. When the command of the received variation suppression command value is a "load decrease" command (Step S300: Yes), the load controller 118 generates a command value C3 by which the storage battery unit 300 is caused to discharge the maximum discharge power within a range of a variation width W3 and to output the generated command value C3 to the storage battery unit 300 (Step S302). Thus, the storage battery unit 300 is controlled to discharge on the basis of the command value C3 output by the load controller 118. In the following drawings, the storage battery unit is referred to as a "storage battery U."

Subsequently, the load controller 118 generates a command value C2 by which an operation of the reverse power flow preventing heater 220 is caused to be stopped and to output the generated command value C2 to the reverse power flow preventing heater 220 (Step S304). In the following drawings, the reverse power flow preventing heater is represented as "reverse power flow prevention H." The reverse power flow preventing heater 220 is controlled to stop its operation on the basis of the command value C2 output by the load controller 118. Subsequently, the load controller 118 determines whether a subtraction value D3 exceeds a median of a variation width W1 (Step S306). When the subtraction value D3 exceeds the median of the variation width W1 (Step S306: Yes), the load controller 118 generates a command value C1 by which the cell 210 is caused to generate power P within a range of the median of the variation width W1 and to output the generated command value C1 to the cell 210 (Step S308). Thus, the cell 210 is controlled to generate electricity on the basis of the command value C1 output by the load controller 118. Furthermore, when the subtraction value D3 does not exceed the median of the variation width W1 (Step S306: No), the load controller 118 generates a command value C1 by which an operation of the cell 210 is caused to be stopped and to output the generated command value C1 to the cell 210 (Step S310). Thus, the cell 210 is controlled to stop its operation on the basis of the command value C1 output by the load controller 118.

Subsequently, the energy management device 100 determines whether a command of the received variation suppression command value is a "load increase" command (Step S312). When the command of the received variation suppression command value is not a "load increase" command (Step S312: No), the energy management device 100 performs a process of Step S320 which will be described later. When the command of the received variation suppression command value is a "load increase" command (Step S312: Yes), the load controller 118 generates a command value C3 by which the storage battery unit 300 is caused to be charged with maximum charge power within a range of the variation width W3 and to output the generated command value C3 to the storage battery unit 300 (Step S314). Thus, the storage battery unit 300 is controlled to be charged on the basis of the command value C3 output by the load controller 118.

Subsequently, the load controller 118 generates a command value C2 by which the reverse power flow preventing heater 220 is caused to maximally consume power within a range of the variation width W2 and to output the generated command value C2 to the reverse power flow preventing heater 220 (Step S316). Thus, the reverse power flow preventing heater 220 is controlled to consume power on the basis of the command value C2 output by the load controller 118. Subsequently, the load controller 118 generates a command value C1 by which an operation of the cell 210 is caused to be stopped and to output the generated command value C1 to the cell 210 (Step S318). Thus, the cell 210 is controlled to stop its operation on the basis of the command value C1 output by the load controller 118.

Subsequently, the energy management device 100 determines whether the command of the received variation suppression command value is a "preliminary preparation" command (Step S320). When the command of the received variation suppression command value is not a "preliminary preparation" command (Step S320: No), the process in this flowchart ends. When the command of the received variation suppression command value is a "preliminary preparation" command (Step S320: Yes), the load controller 118 determines whether an accumulated capacity of the storage battery unit 300 is shifted by a predetermined value or more from a reference charging rate (Step S322). When the accumulated capacity of the storage battery unit 300 is not shifted by the predetermined value or more from the reference charging rate (Step S322: No), the process in this flowchart ends. When the accumulated capacity of the storage battery unit 300 is shifted by the predetermined value or more from the reference charging rate (Step S322: Yes), the load controller 118 generates a command value C3 by which the storage battery unit 300 is caused to approach the reference charging rate and to output the generated command value C3 to the storage battery unit 300 (Step S324).

Thus, control is performed so that the storage battery unit 300 is charged with predetermined power or predetermined power is discharged from the storage battery unit 300 on the basis of the command value C3 output by the load controller 118. Here, the process in this flowchart ends.

According to the energy management device 100 of the first embodiment described above, the fuel cell unit 200 and the storage battery unit 300, which have different response rates, may be selected to increase or decrease an amount of power consumption of power supplied from the commercial power supply CP on the basis of a variation suppression command value transmitted from a host S. The energy management device 100 generates command values used to vary an amount of power consumption of power supplied from the commercial power supply CP, and outputs the generated command values to the selected fuel cell unit 200 and storage battery unit 300. Thus, the energy management device 100 can follow the variation suppression command value transmitted from the host S quickly.

### (Modified example of first embodiment)

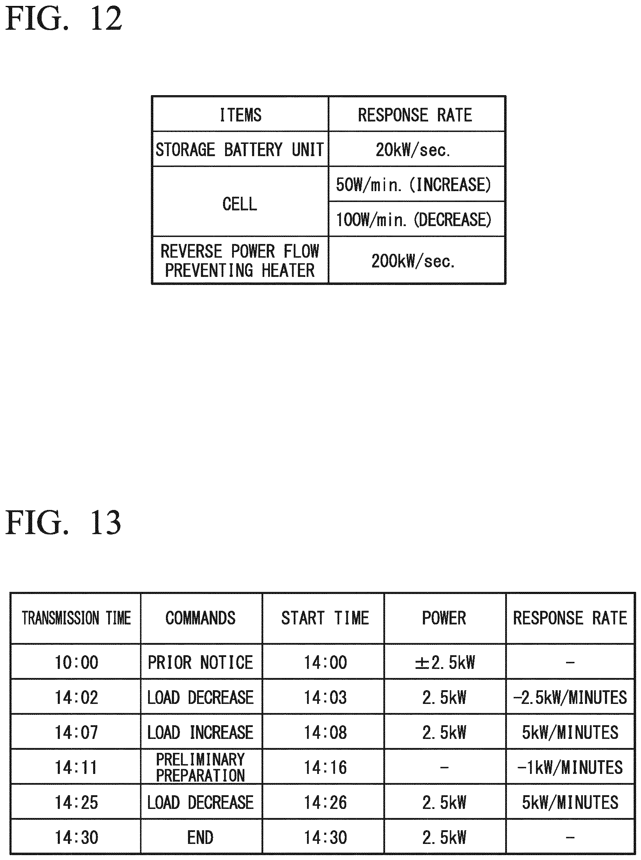

Hereinafter, a modified example of the first embodiment will be described. Here, as a difference from the first embodiment, a case in which information associated with a response rate is included in a variation suppression command value will be described. Hereinafter, description of the same functions or the like as in the above-described first embodiment will be omitted. Fig. 12 is a table illustrating an example of response rates of power consumption adjusting devices. Hereinafter, the table illustrating the example of the response rates of the power consumption adjusting devices is referred to as a "response rate table."

A response rate of a storage battery unit 300 is, for example, 20 [kW/sec]. In other words, the storage battery unit 300 can be charged with maximum charge power (for example, 2 [kW]) or the storage battery unit 300 can discharge the maximum charge power (for example, 2 [kW]) 0.1 seconds after the storage battery unit 300 is controlled by a load controller 118.

For example, a response rate of a cell 210 when its operation starts is 50 [W/min]. Furthermore, for example, a response rate of the cell 210 when its operation stops is 100 [W/min]. In other words, the cell 210 can generate a predetermined amount of electricity (for example, 0.35 [kW]) 10 minutes after its operation starts, for example, when the predetermined amount of electricity is 500 W.

For example, a response rate of a reverse power flow preventing heater 220 is 200 [W/sec]. In other words, the reverse power flow preventing heater 220 can consume maximum consumption power (for example, 2 [kW]) 10 seconds after being controlled by the load controller 118. Note that the above-described response rate table is assumed to be stored in a storage 130 in advance.

Fig. 13 is a view illustrating an example of variation suppression command values received by a receiving unit 112 related to the modified example of the first embodiment. The variation suppression command value includes, for example, information of a transmission time, a command, a start time, an amount of power consumption, and a response rate. A response rate is a value obtained by dividing a variation width Wn by a time difference between the transmission time and the start time. Note that the response rate is an example of information indicating "urgency."

An energy management device 100 receives, for example, a variation suppression command value transmitted from a host S at time 14:02. At this time, for example, information such as an amount of power consumption of 2.5 [kW], a "load decrease" command, and a response rate of -2.5 [kW/minute] is given to the variation suppression command value.

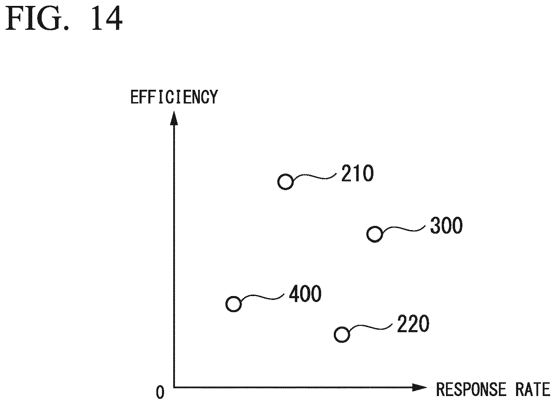

Fig. 14 is a map serving as an example in which response rates and energy efficiencies of power consumption adjusting devices are illustrated. Hereinafter, the map serving as the example in which the response rates and the energy efficiencies of the power consumption adjusting devices are illustrated is referred to as a "response rate and efficiency map."

The storage battery unit 300 has a better response rate than other power consumption adjusting devices. Furthermore, the cell 210 has better efficiency than other power consumption adjusting devices. The reverse power flow preventing heater 220 has worse energy efficiency than other power consumption adjusting devices, but has the next fastest response rate after the storage battery unit 300. Note that the above-described response rate and efficiency map is assumed to be stored in the storage 130 in advance.

The variable range and operation order determining unit 116 selects a plurality of power consumption adjusting devices in which a response rate of the variation suppression command value is satisfactory on the basis of the response rate table and the response rate and efficiency map stored in the storage 130. The variable range and operation order determining unit 116 determines a variation width of the selected power consumption adjusting device from the command of the variation suppression command value and the variation width Wn for each power consumption adjusting device. Thus, the energy management device 100 can efficiently increase or decrease an amount of power consumption.

The variable range and operation order determining unit 116 may select the power consumption adjusting device on the basis of a time interval between start time included in the latest variation suppression command value and start time included in the past variation suppression command value among the variation suppression command values received by the receiving unit 112.

The variable range and operation order determining unit 116 selects a power consumption adjusting device with a fast response rate, for example, when a time interval (for example, 5 seconds) between a start time included in the latest variation suppression command value and a start time included in a variation suppression command value one before the latest variation suppression command value is less than a threshold value (for example, 10 seconds). Furthermore, the variable range and operation order determining unit 116 may select a power consumption adjusting device with a slow response rate within a range in which a time interval is satisfactory, for example, when a time interval (for example, 10 seconds) between a start time included in the latest variation suppression command value and a start time included in a variation suppression command value one before the latest variation suppression command value is a threshold value (for example, 10 seconds) or more.

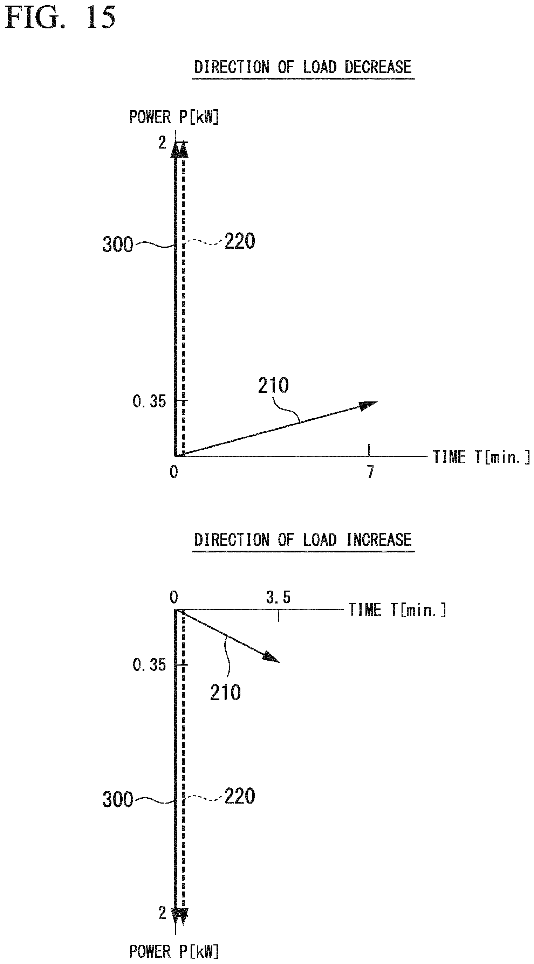

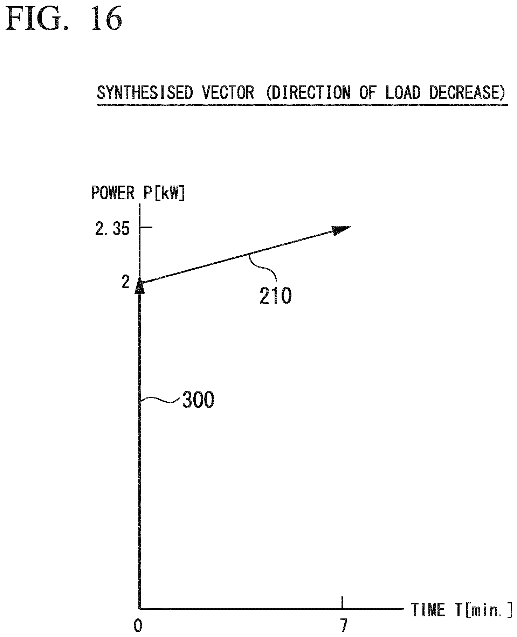

Fig. 15 is a vector diagram illustrating an example of response rates of the power consumption adjusting devices. Fig. 16 is a synthesized vector diagram in which response rates of the storage battery unit 300 and the cell 210 are synthesized. Vectors dealt with in this embodiment are stored in the storage 130, for example, as values weighted with a matrix indicating unit vectors.

The variable range and operation order determining unit 116 may select a plurality of power consumption adjusting devices in which the amount of power consumption of the variation suppression command value and the response rate are satisfactory from synthesized vectors of vectors of response rates of the power consumption adjusting devices. The variable range and operation order determining unit 116 selects the storage battery unit 300 and the cell 210, for example, when the amount of power consumption of the variation suppression command value is 2.35 [kW] and the response rate is 330 [W/min]. Thus, the energy management device 100 can reduce, for example, an amount of power consumption of 2.35 [kW] for 7 minutes.

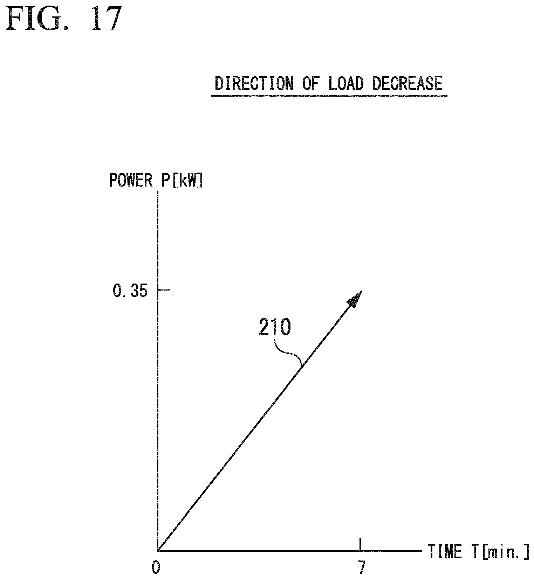

Fig. 17 is a vector diagram illustrating an example of a response rate of the cell 210.

The variable range and operation order determining unit 116 may select a single power consumption adjusting device if the amount of power consumption of the variation suppression command value and the response rate are satisfactory. The variable range and operation order determining unit 116 may select the cell 210, for example, when the amount of power consumption of the variation suppression command value is 0.35 [kW] and the response rate is 50 [W/min].

According to the energy management device 100 of the modified example of the first embodiment described above, the energy management device 100 can follow the variation suppression command value transmitted from the host S quickly. In addition, an amount of power consumption can be more efficiently increased or decreased.

### (Second embodiment)

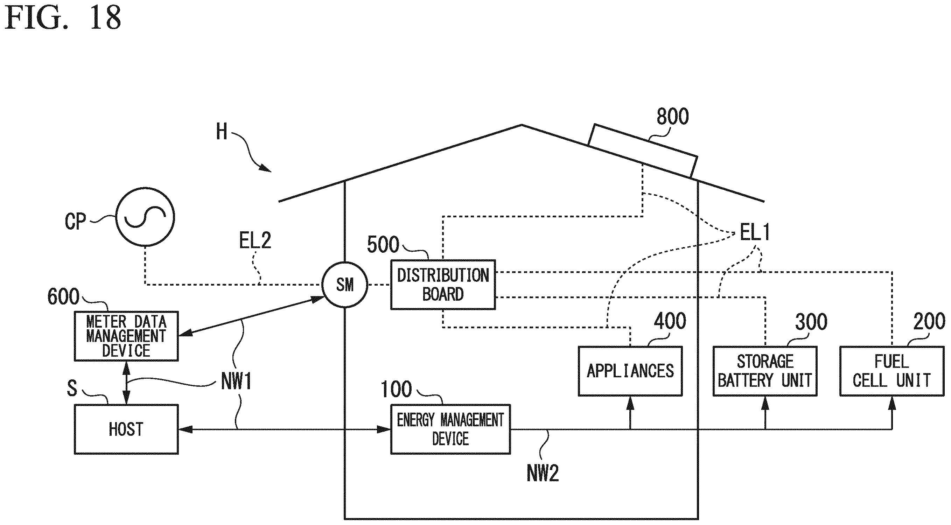

Hereinafter, a second embodiment will be described. Here, as a difference with the above-described embodiment, a case in which a constitution of an energy management device 100 differs will be described. Hereinafter, descriptions of the same functions and the like as the above-described embodiment will be omitted. Fig. 18 is a schematic diagram of the energy management device 100 related to the second embodiment. A building H is, for example, a house. The building H includes the energy management device 100, a fuel cell unit 200, a storage battery unit 300, an appliances 400, a distribution board 500, a solar photovoltaic device 800, and a smart meter SM.

The energy management device 100 communicates with a host S outside of the building H over a network NW1. Furthermore, the energy management device 100 communicates with the fuel cell unit 200, the storage battery unit 300, the appliances 400, and the smart meter SM over a network NW2.

The solar photovoltaic device 800 is connected to the distribution board 500, for example, via an electric line EL1. A photovoltaic system includes, for example, solar cells and a power converting unit. The solar cells are made of, for example, semiconductors such as crystalline silicon and amorphous silicon. The solar cells convert light energy of sunlight radiated to semiconductors into electric energy and generate DC power. A power converting unit converts the power generated by the solar cells into AC power and supplies the AC power to the outside via the electric line EL1. Thus, the power generated by the solar cells is supplied to the storage battery unit 300 and the appliances 400 via the distribution board 500. The solar photovoltaic device 800 is an example of a "power supply."

The host S transmits a variation suppression command value to the energy management device 100 and a meter data management device 600, for example, over the network NW1.

The smart meter SM receives the variation suppression command value transmitted from the host S via the meter data management device 600. The smart meter SM collects, for example, information including the received variation suppression command value and power supplied from a commercial power supply CP. The smart meter SM transmits the collected information to the meter data management device 600.

The meter data management device 600 is a device configured to provide information referring to the efficient use of energy to a user of the building H. The meter data management device 600 is, for example, a meter data management system (MDMS). For example, the meter data management device 600 receives and analyzes the variation suppression command value transmitted from the host S and the information transmitted from the smart meter SM. The meter data management device 600 transmits the analyzed information (hereinafter referred to as "analysis information") to the energy management device 100 via the host S. The energy management device 100 receives the analysis information transmitted from the meter data management device 600. The energy management device 100 (a variable range and operation order determining unit 116) selects a power consumption adjusting device on the basis of the received analysis information. For example, the energy management device 100 outputs the received analysis information to the display unit 150. Thus, the user can efficiently use the appliances 400. Note that the meter data management device 600 and the smart meter SM are an example of a "management unit."

Thus, the energy management device 100 can follow the variation suppression command value transmitted from the host S quickly. In addition, an amount of power consumption can be more efficiently increased or decreased.

Hereinafter, another modified example will be described.

For example, a load controller 118 may generate a command value C4 used to operate or stop an appliances 400 and output the command value C4 to an appliances 400.

The appliances 400 is controlled to perform or stop its operation on the basis of the command value C4 output by the load controller 118. When the appliances 400 is a temperature management device, the temperature management device is controlled to change an air volume, a temperature, and the like on the basis of the command value C4 output by the load controller 118. The temperature management device is a device configured to manage a temperature of the building H such as, for example, an air conditioner and a floor heating device. Thus, the energy management device 100 can follow the variation suppression command value transmitted from the outside quickly. Note that the appliances 400 is an example of a "load."

According to at least one of the embodiments described above, the fuel cell unit 200 and the storage battery unit 300, which have different response rates, are selected so that an amount of power consumption of the power supplied from the commercial power supply CP is increased or decreased on the basis of the variation suppression command value transmitted from the host S. The energy management device 100 generates command values used to change an amount of power consumption of the power supplied from the commercial power supply CP and outputs the command values to the selected fuel cell unit 200 and storage battery unit 300. Thus, the energy management device 100 can follow the variation suppression command value transmitted from the host S quickly.

Although some embodiments of the present invention have been described, these embodiments are presented as examples and are not intended to limit a range of the invention. These embodiments can be carried out in various other embodiments, and various omissions, substitutions, and changes can be performed without departing from the gist of the present invention. These embodiments and modifications thereof are included the invention disclosed in the claims and the equivalent thereof as included in the scope and gist of the present invention.

### [Reference Signs List]

- H: building
- S: host
- 100: energy management device
- 110: controller
- 112: receiving unit
- 114: determining unit
- 116: variable range and operation order determining unit
- 118: load controller
- 130: storage
- 200: fuel cells
- 210: cell
- 220: reverse power flow preventing heater
- 230: hot water storage tank
- 300: storage battery
- 400: appliances
- 500: distribution board
- CP: commercial power supply

## Claims

1. An energy management device comprising:
a selection unit configured to select a power supply or load to be controlled in accordance with responsibility, among a plurality of power supplies or loads having different responsibilities, in accordance with a command used to change an amount of consumption of a power supplied from a commercial power supply; and
an output unit configured to output a control signal used to change the amount of consumption of the power supplied from the commercial power supply to a control circuit configured to control the power supply or load selected by the selection unit.

2. The energy management device according to claim 1, wherein the selection unit selects the power supply or load to be controlled in accordance with the responsibility when the selection unit receives the command used to change the amount of consumption of the power supplied from the commercial power supply within a predetermined time interval.

3. The energy management device according to claim 1, wherein the selection unit selects the power supply or load to be controlled in accordance with the responsibility on the basis of urgency included in the command used to change the amount of consumption of the power supplied from the commercial power supply.

4. The energy management device according to claim 1, wherein the selection unit sequentially selects power supplies or loads with faster responsibility of the plurality of power supplies or loads.

5. The energy management device according to claim 1, wherein the selection unit derives an amount of power consumption changed due to the selected power supply or load on the basis of the command and the responsibility of the power supply or load.

6. The energy management device according to claim 1, wherein the selection unit selects the power supply or load on the basis of a synthesized vector obtained by synthesizing vectors indicating the urgency of the command and the responsibility of the power supply or load.

7. The energy management device according to claim 1, further comprising:
a management unit configured to manage data related to power supplied from the commercial power supply and output a command signal,
wherein the selection unit selects the power supply or load on the basis of the command signal.

8. An energy management method comprising:
selecting a power supply or load to be controlled in accordance with responsibility, among a plurality of power supplies or loads having different responsibilities, in accordance with a command used to change an amount of consumption of a power supplied from a commercial power supply; and
outputting a control signal used to change the amount of consumption of the power supplied from the commercial power supply to a control circuit configured to control the power supply or load selected.

9. A storage medium storing an energy management program causing a computer to:
select a power supply or load to be controlled in accordance with responsibility, among a plurality of power supplies or loads having different responsibilities, in accordance with a command used to change an amount of consumption of a power supplied from a commercial power supply; and
output a control signal used to change the amount of consumption of the power supplied from the commercial power supply to a control circuit configured to control the power supply or load selected.
